# EUROPEAN PATENT APPLICATION

(11) **EP 1 400 970 A1**
(43) Date of publication of application: **24.03.2004**
(21) Application number: 02020234.7
(22) Date of filing: 10.09.2002
(51) Int. Cl.: G11B 19/28, B60R 27/00

(54) **A method and apparatus for operating an automotive storage facility**

(71) Applicant: SIEMENS AKTIENGESELLSCHAFT, 80333 München (DE)
(72) Inventor: Schuerman, Kees, 5508 PV Veldhoven (NL); van Beurden, Eric, 5045 GA Tilburg (NL)

(57) **Abstract**

An automotive-based and vehicle-associated mass data storage facility contains mechanical drive means for driving a mass-data storage medium when the latter is loaded viz à viz said mechanical drive means, and pickup means for reading the mass data storage facility when the mass data storage medium is actually being driven by the mechanical drive means.

In particular, the mass data storage facility is operated by sensing a user and/or system data requirement viz à viz the mass data storage medium, and under control of the sensing the driving and reading of said mass data storage medium is activated towards a cache memory that is immediately interfaced towards the pick-up means. Under control of a qualified absence of said sensing, the driving and reading are deactivated to a vestigial activity level.

## Description

The invention relates to a method for operating an automotive-based and vehicle-associated mass data storage facility that contains mechanical drive means for driving a mass-data storage medium when the latter is loaded viz à viz said mechanical drive means, and pickup means for reading said mass data storage facility when said mass data storage medium is actually being driven by said mechanical drive means. Such mass storage systems have been used in all kinds of environments, such as for storing music, game data, vehicle-related data such as maps, and various others. Generally, the usage of such data by the travellers has been quite often intermittent.

Of late, such systems are being used for vehicle navigation and similar data-intensive tasks and are becoming a key item in a motor vehicle's standard equipment. Now, the general environment of a motor vehicle has proven to be a harsh one for such equipment due to such causes as extreme variations in ambient temperature, high-level accelerations from vibrations as well as from shock, and various other parameters. Now in particular, the lifetime of automotive CD, DVD, and other such drives is often limited by the lifetime of their mechanical and/or optical parts, such as the turntable and sledge motors, and the optical pickup unit (OPU). Especially with regard to the latter, both low (-20°C) and high (+85°C) temperatures will shorten its life appreciably, and in particular, render that life shorter than the life of either the rest of the navigational system, or rather, the life of the vehicle as a whole.

In principle, it were possible to shut down the mass storage facility for an appreciable fraction of the time to avoid wear and tear, but the present inventors have duly recognized the prime importance of a good data management policy for letting the driver be always assisted by the data system to an acceptable degree. In particular, the performance of a system incorporating a CD, DVD or similar drive may to a large extent be determined by the I/O data rate and the I/O data latency of the CD/DVD I/O subsystem. This is especially the case when the drive is not spinning all the time, because spinning-up of the drive will involve calibration, disk type detection, and therefore may take several seconds, such as typically 5-8 seconds. Therefore, the inventors were faced with solving the problem of a trade-off between system I/O performance and system lifetime. The problem has become all the more relevant for state of the art disk drives that use higher rotational speeds than standard CDs and the like. It should be clear that this would further raise the requirements to the above-considered critical parts of such system.

Furthermore, the inventors have recognized the well-developed ***cache technology*** in various computer-oriented environments, and wherein a high-speed cache will raise the effective operational speed of a processor's main memory that is generally constructed from matrix oriented modules such as solid state. The cache will also be matrix-based, but the basic read (and if applicable, write) operation in a cache would be faster than in main memory. Now, the present inventors have considered that it would be advantageous to use such cache in an immediate interface organization viz à viz the mass storage medium, that is generally based on a rotary drive and an optical pickup.

In consequence, amongst other things, it is an object of the present invention to interface the mass storage medium to an on-board cache memory for allowing during time intervals that no data exchange is necessary or expected between the cache and the mass storage medium a spin-down operation viz à viz said mechanical drive means, thereby alleviating the problems related to mechanical deterioration of such system parts as drive motors and optical pickup means. It should be clear that the size and further operational characteristics of the cache memory should be appropriate as much as possible to the operational characteristics of the mass storage means. The vestigial activity level should be such that the above-mentioned wear and tear should be diminished to a great extent. However, certain applications could benefit from a much lower spinning speed than standard, such as a few percent of the latter only; so that they could run on a vestigial non-zero level. Generally, the vestigial level would be substantially equal to zero. The system could operate with more than one relatively high driving speed, next to one or more vestigial driving speeds.

Now, the present inventors have been aware that certain high-end CD/DVD disk drives have been proposed to contain an I/O buffer with a read-ahead mechanism. The purpose of such I/O buffer is to decouple the speed of the disk from the speed of the electronic interface to the application. In consequence, such buffer would be principally organized on the basis of a First-In-First-Out sequencing. Therefore, such drive I/O buffering works fine for streaming applications but its contribution to the I/O performance of data applications with often widely-scattered disk accesses is generally only of limited value. The present invention introduces a cache facility that can service repeated and quasi-chaotic data requests from various different and apparently unrelated parts of the disk.

Furthermore, drives have been proposed that incorporate a fixed spin timeout mechanism that makes the drive stop spinning when no data have been requested for some period of time that is the so-called spin timeout. Typical values are 1 to 2 minutes. This fixed and relatively long drive spin timeout of the prior art is of little value when the data I/O may be scattered over time. For example, if an application does a data access every 2 minutes, the prior art drive would keep spinning all the time. According to the present invention, the cache itself could service many successive data requests, because the cache could be controlled in a sensible manner to look ahead and anticipate what data a particular application could be wanting next. This in particular, is the cache functionality, where the software-addressable fragmentation of the cache allows precise dedication of the cache space to those data items that are expected to be needed next.

Now therefore, according to one of its aspects the method according to the invention is characterized by comprising the steps of sensing a user and/or system data requirement viz à viz said mass data storage medium, and under control of said sensing activating said driving and reading of said mass data storage medium towards a cache memory that is immediately interfaced towards said pick-up means, and under control of a qualified absence of said sensing, deactivating said driving and reading to a vestigial activity level.

Measures of preference with regard to said cache memory are being characterized in that said cache memory is interposed between said mass data storage medium and an on-board data processing facility, in that said cache memory is read-only with respect to said mass storage medium, in that said cache memory is fully associative, or in that said cache memory is operated on a Least Recently Used (LRU) cache block replacement strategy.

According to another aspect, the method according to the invention is preferably being characterized in that said vestigial activity level is substantially zero.

Other measures of preference according to the invention are being characterized in that in the case that the mass medium is unable to present a complete cache block, any presented part of the cache block in question is immediately presented to said on-board data processing facility, in that said user and/or system data requirement is based on anticipation or in that said driving is activated for a predetermined and renewable first time period **T**_{**sp**} that is loaded in a decrementable counter facility through detecting a data delivery operation by said mass storage medium.

Said driving may further be characterized in that is activated for a predetermined second time period **T**_{**sp-init**} which is loaded as said first time period **T**_{**sp**} through detecting an inserting operation on said mass storage medium, in that it is activated for a predetermined third time period **T**_{**sp-acc**} which is shorter than said second time period **T**_{**sp-init**} through detecting a forthcoming disk data request by said on-board data processing facility, in that it is activated for a predetermined fourth time period **T**_{**sp-app-i**} through detecting a forthcoming disk data request by an application event ***i*** that is actually running on said on-board data processing facility, or in that it is activated for a predetermined and renewable fifth time period **T**_{**sp-app-usr**} which is longer than said third time period **T**_{**sp-acc**} through detecting a mechanical user interface operation viz à viz said on-board data processing facility.

The invention also relates to an apparatus being arranged for implementing a method as claimed in Claim 1 and to a motor vehicle provided with such on-board apparatus, for effecting a vehicle navigation function. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
- Figure 1,: an overall block diagram of the embodiment's operational structure;
- Figure 2,: a driver cache of the embodiment;
- Figures 3a, 3b,: the insert disk, initialize drive, and drive spin control procedures;
- Figure 4,: the disk data request and drive spin control procedures;
- Figure 5,: the application event and drive spin control procedures.

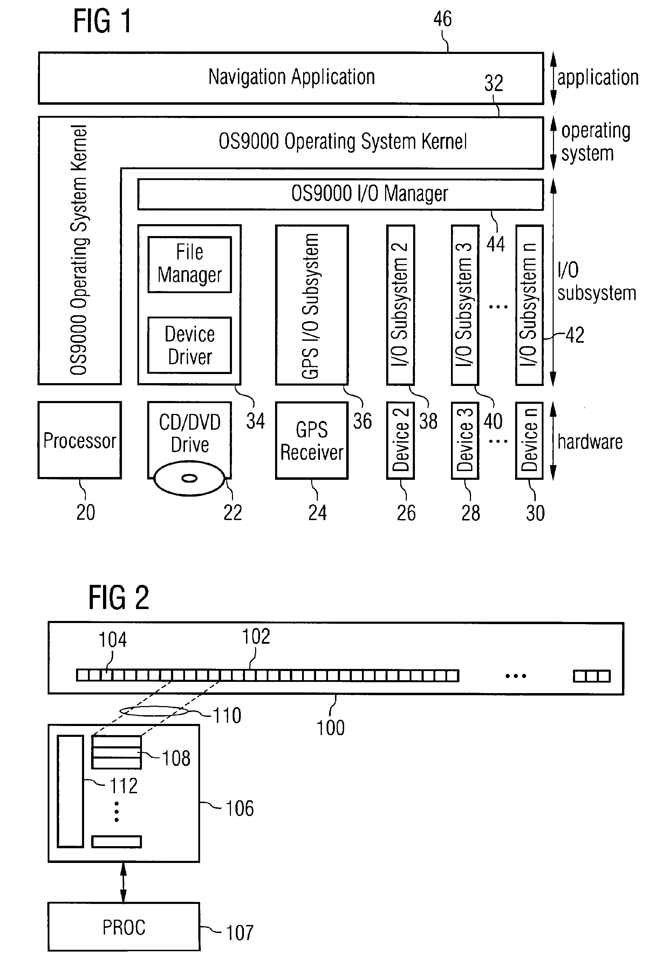

Figure 1 illustrates an overall block diagram of the embodiment's operational structure. At the right hand side of the Figure, the various system layers are distinguished, whilst going from the generally hardware items at the bottom of the Figure to the application layer at the top, here the vehicle navigation application. In between are the operating system layer that generally limits to the operating system kernel 32, the OS9000 I/O manager layer 44, and the I/O subsystem layer. Of course, the structure could be organized in a different manner.

At the hardware level, there are processor 20, CD/DVD drive 22, GPS receiver 24, and various other devices 26-30 not discussed in particular. At the I/O subsystem level, there are furthermore block 34 containing the device driver and file manager for the CD/DVD drive, the GPS I/O subsystem 36, and various I/O subsystems 38-42 pertaining to respective devices 26-30 not further considered. For brevity, the discussion has not been detailed on most of the various subsystems, nor has any interconnection pattern been shown at the hardware level. In principle, the multi-layer sketch as shown bases on conventional methodology. The heart of the present embodiment is structured into the device driver sub-block of block 34. For simplicity, mechanical and optical details have been omitted.

Figure 2 illustrates a CD/DVD driver cache of the embodiment. Herein, block 100 symbolizes the storage medium, which carries the actual data storage structure. For simplicity, this has been represented here as a linear sequence 102 of sectors, of which a single one 104 has been indicated separately in the form of a block. The standard size of such block is 2 kByte. For simplicity, the disclosure abstracts from the difference between physical and logical sectors; furthermore, a read-only medium has been considered for simplicity. Now, upon accessing the disk storage area, a cache 106, preferably on-board, will load data that are organized in blocks 108 or cache ***lines*** as the art calls it. A cache block is constituted by a number of consecutive disk sectors, which number in the embodiment shown is chosen to be ***four***, as indicated by interrupted lines 110. The overall administration of the block storage organization is effected through block administration facility 112. Furthermore, the cache communicates with data processing facility 107. The cache is as shown immediately interfaced to the mass storage medium in the sense that no data manipulation is present that would rearrange the serial data out from the storage disk. The immediate interfacing does not exclude the use of I/O interface facilities, such as a drive data I/O interface. Of course, reading head, amplifying, analog filtering, and similar operations would be effected, but there is no change of the digital data after readout.

The size of a block is **2**^{**s**} sectors (here, S=2), and the cache is **2**^{**B**} blocks, which are the cache configuration parameters, that can be dimensioned according to need. Again for brevity, all hardware realizations have beeen suppressed, inasmuch as the operation and control of caches has been well-documented. A particular detail however, is that the present embodiment is completely software-controlled, not hardware. Furthermore, the cache is fully associative and has a replacement strategy, such as a Least Frequently Used or a **L**east **R**ecently **U**sed (**LRU**) cache block replacement strategy. The latter strategy has been used in a practical embodiment of the invention. Disk accesses are performed on a cache block basis and will be cache block aligned on the disk. In the exceptional case that the disk drive cannot deliver a complete block, but rather an incomplete one, the part of the block which can be provided immediately is delivered straightforwardly to the associated application and is not cached. The above problem can be caused by a part of the block being absent from the disk, or by a part of the block being unreadable through a scratch or other physical problem on the disk. The cache will be empty at start-up of the system, and will be flushed (made empty) upon inserting of a disk in the disk drive.

Caching has been proven especially useful in a motor vehicle data processing environment when different processes of the application are effectively accessing different parts of the disk. In a vehicle navigation system such may happen when the system is browsing third-party data, such as an on-disk tourist guide, while at the same time the system is planning a route. In itself, on a hardware level the cache design follows a relatively standard methodology. In contradistinction, the cache ***implementation*** of the present invention is done in software.

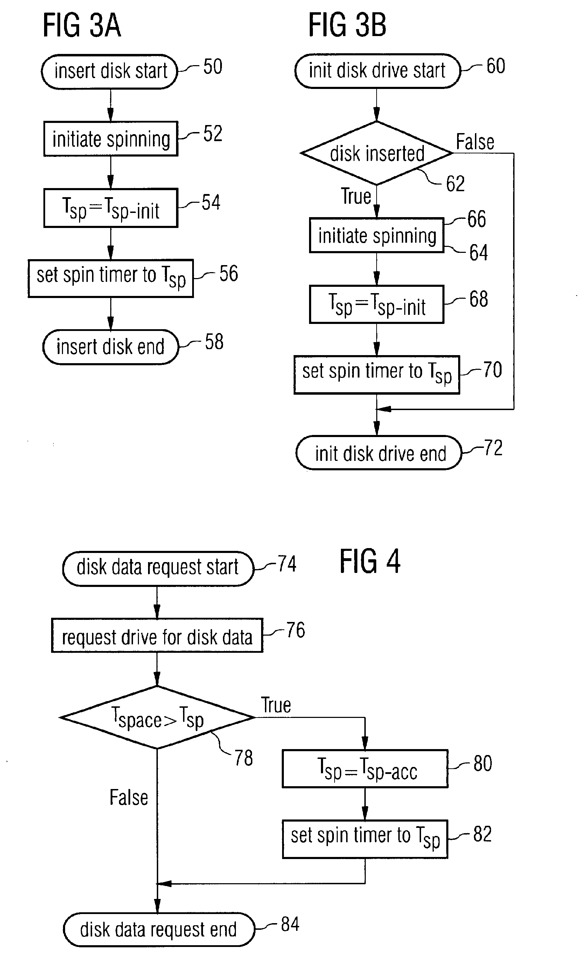

Figures 3a, 3b illustrate the ***insert disk*** procedure, and the ***initialize drive*** and ***drive spin control*** procedures, respectively. Figure 3a illustrates the ***insert disk*** procedure, and in block 50 the system detects, such as by a mechanical sensor, that a disk has been inserted. Such detection could furthermore bring about the assigning of sufficient hardware and software facilities in the data processing of the drive, but such has been left out from consideration hereinafter. Subsequently, in block 52 the spinning of the disk is initiated. For simplicity, the embodiment hereinafter considers only ***two*** spinning velocities, ***standard*** versus essentially ***zero***. In principle however, the invention could be used with varying rotational speeds, but such has not been considered for brevity. Anyway, the lifetime of the various parts should be higher with lower speeds. In block 54, the value **T**_{**sp-init**} is retrieved to be used as **T**_{**sp**}**.** In block 56, the spin timer is set to the preset value of **T**_{**sp**}**,** which value thereupon is periodically decremented. Upon attaining zero, spinning velocity goes down to the vestigial value. In block 58, the ***insert disk*** procedure terminates. Effectively, the long spin timeout can be a few minutes, to ensure that the disk remains available to the application in question for, if required, effecting a considerable amount of initial I/O, such as for loading an appreciable part of a road map. The procedure of Figure 3a has been simplified. For example, there has only been shown a single exit from the procedure. This and further simplifications would be clear to persons skilled in the art that could apply amendments to better suit their actual requirements without, however, departing from the scope of the present invention.

Figures 3b illustrates the ***initialize drive*** and ***drive spin control*** procedures. In block 60, the procedure is started, in similar manner as in Figure 3a. In block 62, the system detects whether a disk has actually been inserted. If FALSE, the procedure goes to block 72, whereupon the procedure terminates. If TRUE in block 62, the procedure goes to block 64. In fact, blocks 64-70 correspond to blocks 52-56 in Figure 3a.

Figure 4 illustrates the disk data request and drive spin control procedures. Block 74 represents the start of a request for disk data, which may be caused by the application that needs data not present in the cache. Alternatively, the request may be caused by the hardware serving the application, such as by an interrupt from a sensor. Such interrupt is then immediately translated into an appropriate data identifier such as an address. In block 76, the request signalization is actually received. In block 78, the system detects whether the appropriate timespin value is greater than the remaining value present in the timer. If FALSE, no further measure is necessary, and the system goes to the disk data request end in block 84. If TRUE in block 78, however, the system in block 80 updates the actual value of the timer, which is then loaded into the timer in block 82; these two blocks broadly corresponding to blocks 54, 56 in Figure 3a. As shown, the timer value is renewable. The data request need not be one that is actually signalled; it may represent an expected or probable need, always provided that the data in question have not been cached already.

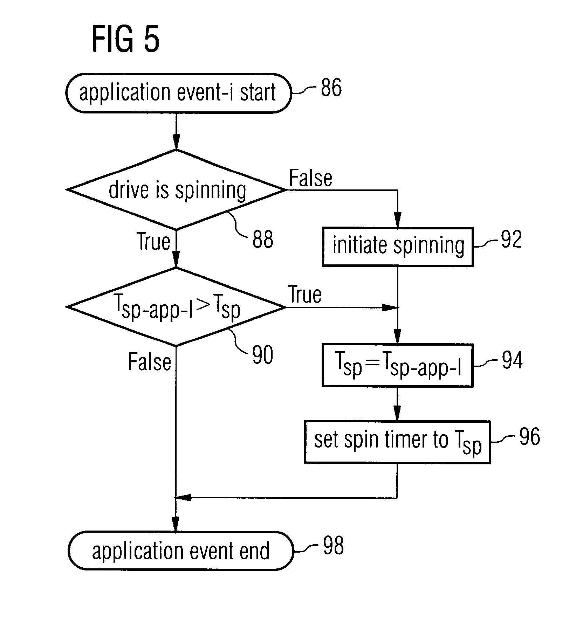

Figure 5 illustrates the application event and drive spin control procedures. Like in earlier Figures, the procedure starts in block 86, upon detecting that a particular application has started processing an "event-i". The object of the procedure hereinafter is to have the drive being controlled at high speed during the time that the "event-i" is expected to need accessing the drive. In fact, the motor vehicle navigation system may run various applications in parallel, such as route planning and re-planning, the latter being started by events such as traffic jams developing, traffic message listening, vehicle system management, user communication, fleet management, and various others. In block 88, the system detects whether the disk is actually spinning.

Now, if TRUE in block 88, the system goes to block 90, and detects whether the expected interval that would be necessary is larger that the value presently loaded in the timer. If FALSE, no further action is necessary, and the system goes to application event block 98. If FALSE in block 88, first the drive spinning is initiated in block 92. This by itself may take a few seconds. Next, and also if TRUE in block 90, block 94 timeout value **T**_{**sp-app-i**} is set to one pertaining to the event-i, and in block 96 the timer is loaded with that value. There can be multiple application events and therefore multiple instances of **T**_{**sp-app-i**}**,** e.g. **T**_{**sp-app-1**}**, T**_{**sp-app-2**}**,** etc. Each drive I/O related event can be programmed to a specific timeout value. A particular case is when a potential vehicle deviation from the planned route is detected; usually, a few seconds' timeout would be sufficient. Another case is when the user person interacts with the system such as by speech or by a mechanical user input, e.g. through pressing a button, which would be expected to need a relatively long spin timeout **T**_{**sp-app-usr**}**,** such as 20 seconds. The impact is that as long as the user interacts with the system, the drive is available for servicing requests. In practice, user interaction is widely spaced in time. In the above **T**_{**sp-app-I**} also covers external events initiated by for example the user, the vehicle or any other entity. **T**_{**sp-app-usr**} is therefore a species of **T**_{**sp-app-I**} and for which the description of **T**_{**sp-app-I**} is applicable.

The present invention has been disclosed with reference to preferred embodiments that should be considered as exemplary, instead of restrictive, inasmuch as persons skilled in the art would recognize numerous amendments within the scope of the appended Claims. Additional advantages of the invention would be less power consumption, less heat dissipation, and less mechanical drive noise.

## Claims

1. A method for operating an automotive-based and vehicle-associated mass data storage facility that contains mechanical drive means (22) for driving a mass-data storage medium (100) when the latter is loaded viz à viz said mechanical drive means, and pickup means for reading said mass data storage facility when said mass data storage medium is actually being driven by said mechanical drive means, said method being **characterized by** comprising the steps of:
sensing a user and/or system data requirement viz à viz said mass data storage medium, and under control of said sensing activating said driving and reading of said mass data storage medium towards a cache memory that is immediately interfaced towards said pick-up means, and under control of a qualified absence of said sensing, deactivating said driving and reading to a vestigial activity level.

2. A method as claimed in Claim 1, being **characterized in that** said cache memory (106) is interposed between said mass data storage medium (100) and an on-board data processing facility (107).

3. A method as claimed in Claim 1, being **characterized in that** said cache memory is read-only with respect to said mass storage medium.

4. A method as claimed in Claim 1, being **characterized in that** said cache memory is fully associative.

5. A method as claimed in Claim 1, being **characterized in that** said cache memory is operated on a Least Recently Used (LRU) cache block replacement strategy.

6. A method as claimed in Claim 1, being **characterized in that** said vestigial activity level is substantially zero.

7. A method as claimed in Claim 1, being **characterized in that** in the case that the mass medium is unable to present a complete cache block, any presented part of the cache block in question is immediately presented to said on-board data processing facility.

8. A method as claimed in Claim 1, being **characterized in that** said user and/or system data requirement is based on anticipation.

9. A method as claimed in Claim 1, being **characterized in that** said driving is activated for a predetermined and renewable first time period **T**_{**sp**} (54) that is loaded in a decrementable counter facility through detecting a data delivery operation by said mass storage medium.

10. A method as claimed in Claim 9, being **characterized in that** said driving is activated for a predetermined second time period **T**_{**sp-init**} which is loaded as said first time period **T**_{**sp**} through detecting an inserting operation (50) on said mass storage medium.

11. A method as claimed in Claim 10, being **characterized in that** said driving is activated for a predetermined third time period **T**_{**sp-acc**} which is shorter than said second time period **T**_{**sp-init**} through detecting a forthcoming disk data request (74) by said on-board data processing facility.

12. A method as claimed in Claim 9, being **characterized in that** said driving is activated for a predetermined fourth time period **T**_{**sp-app-i**} (86) through detecting a forthcoming disk data request by an application event ***i*** that is actually running on said on-board data processing facility.

13. A method as claimed in Claim 11, being **characterized in that** said driving is activated for a predetermined and renewable fifth time period **T**_{**sp-app-usr**} which is longer than said third time period **T**_{**sp-acc**} through detecting a mechanical user interface operation viz a viz said on-board data processing facility.

14. An apparatus being arranged for implementing a method as claimed in Claim 1.

15. A motor vehicle provided with an on-board apparatus as claimed in Claim 14, for effecting a vehicle navigation function.
